# FASCICULE DE BREVET EUROPEEN

(11) **EP 3 197 707 B1**
(45) Date de publication et mention de la délivrance du brevet: **20.02.2019**
(21) Numéro de dépôt: 15778233.5
(22) Date de dépôt: 25.09.2015
(51) Int. Cl.: B60L 11/18, H02J 7/00

(54) **DISPOSITIF DE COUPLAGE ELECTRIQUE EXTENSIBLE POUR STATION DE RECHARGE DE VEHICULE ELECTRIQUE**
AUSZIEHBARE ELEKTRISCHE KOPPLUNGSVORRICHTUNG FÜR EINE LADESTATION VON EINEM ELEKTRIOFAHRZEUG
EXTENSIBLE ELECTRIC COUPLING DEVICE FOR A CHARGING STATION OF AN ELECTRIC VEHICLE

(30) Priorité: 25.09.2014 FR 1459052
(43) Date de publication de la demande: 02.08.2017
(73) Titulaire: Bluetram, 92800 Puteaux (FR)
(72) Inventeur: DANIEL, Ronan, F-29710 Ploneis (FR); GOUZERH, Jean Marc, F-29000 Quimper (FR); LOUVEL, Christian, F-29510 Edern (FR)
(74) Mandataire: Regimbeau
(86) Numéro de dépôt international: PCT/EP2015/072160
(87) Numéro de publication internationale: WO 2016/046392

(56) Documents cités:
- US-A- 5 306 999
- US-A- 6 157 162
- US-A1- 2011 316 474
- US-A1- 2012 048 983
- US-A1- 2014 067 660

## Description

L'invention concerne le domaine des stations de recharge de véhicule électrique.

La présente invention s'applique en particulier, mais non exclusivement, aux véhicules de type tramway.

Plus précisément encore, la présente invention concerne en premier lieu un dispositif de couplage électrique extensible formé d'un vérin/coupleur destiné à être associé à une station de recharge de véhicule électrique pour permettre la recharge d'un véhicule électrique associé.

On connait déjà dans l'état de la technique différents dispositifs destinés à assurer un contact avec un véhicule électrique pour assurer la recharge du véhicule au niveau d'une station de recharge.

Le document EP 1 938 438 décrit par exemple un poste de recharge de véhicule électrique comprenant un bras agencé sur le toit d'un bus/tramway et destiné à venir se connecter dans une prise équipant une station.

Les dispositifs du type décrit dans le document précité ne donnent cependant pas totalement satisfaction. On constate en pratique que la force engendrée lors du déploiement du bras décrit dans ce document engendre des contraintes fortes et des risques élevés de casse. L'énergie de mise en actionnement du vérin décrit dans le document précité étant pneumatique, elle induit des vitesses et efforts complexes à gérer, une pression maintenue en permanence, lesquels peuvent s'avérer dangereux, notamment par exemple si une main s'interpose entre le bras en déploiement et le cône en regard en réception du bras.

De plus, les dispositifs précités conduisent à des protubérances inesthétiques sur le toit du bus, ainsi qu'à un système très volumineux et lourd qui doit être pris en compte pour le comportement routier du bus.

Il est également connu de l'état de la technique les documents US 2011/316474 et US 6 157 162 qui décrivent chacun un dispositif de couplage électrique pour recharger un véhicule électrique.

Le document US2014067660 A1 est considéré comme l'état de la technique le plus proche et divulgue le préambule de la revendication indépendante 1.

Le contexte de l'invention a pour but de proposer des moyens permettant d'améliorer l'état de la technique.

Ce but est atteint selon la présente invention grâce à un dispositif du couplage électrique pour une station de recharge d'un véhicule électrique comprenant un vérin/coupleur comportant un bras extensible adapté pour être déplacé entre une position rétractée et une position déployée dans laquelle le bras est adapté pour assurer une liaison électrique, et des moyens supports du vérin/coupleur autorisant deux degrés de liberté en rotation du vérin par rapport à une embase support autour de deux axes globalement transversaux entre eux et globalement orthogonaux à une direction d'extension du bras, le vérin/coupleur étant placé dans un carter de protection susceptible de débattement angulaire autour d'un axe vertical et autour d'un axe horizontal perpendiculaire à la direction d'extension du bras par rapport à une embase support.

L'homme de l'art comprendra que l'invention propose ainsi un système de vérin associé à la station de recharge et destiné à coopérer avec le véhicule venant se positionner devant une station de recharge.

Le vérin possède plusieurs degrés de liberté ce qui permet d'optimiser la connexion entre la station et le véhicule. Le vérin comprend par ailleurs un système de mise en mouvement fiable et sécurisant pour optimiser le fonctionnement et éviter tout problème de disfonctionnement.

Selon d'autres caractéristiques avantageuses de l'invention :
- le bras extensible est au moins en partie (ou comprend au moins une partie) souple,
- le vérin/coupleur est placé dans un boitier, ou carter, comprenant une trappe sollicitée en position de fermeture dans la position rétractée du bras extensible et ouverte automatiquement lors de la commande en extension du bras,
- le dispositif comprend un contrepoids déplacé automatiquement en sens inverse du déploiement du bras extensible, afin de maintenir le centre de gravité de l'ensemble sensiblement au point d'intersection des deux axes de pivotement des moyens supports,
- le dispositif comprend des moyens formant butée limitant des débattements angulaires autour des axes de pivotement et des moyens amortisseurs freinant le déplacement autour des axes de pivotement.

La présente invention concerne également les stations de recharge équipées d'un dispositif de couplage électrique conforme à l'invention du type précité.

D'autres caractéristiques techniques, buts et avantages de la présente invention apparaitront à la lecture de la description détaillée qui va suivre, et en regard des dessins annexés, données à titre d'exemples non limitatifs, et sur lesquels :
- la figure 1 représente une vue schématique en perspective d'un dispositif de couplage électrique conforme à l'invention en position rétractée du bras extensible, des éléments de carter supérieur, inférieur et latéraux du carter n'étant pas représentés pour montrer la structure interne du dispositif,
- la figure 2 représente une autre vue similaire en perspective du dispositif conforme à l'invention en position rétractée du bras selon une orientation de l'observation différente de la figure 1, avec d'autres éléments de carter non représentés,
- la figure 3 représente une vue similaire à la figure 1 en position déployée du bras,

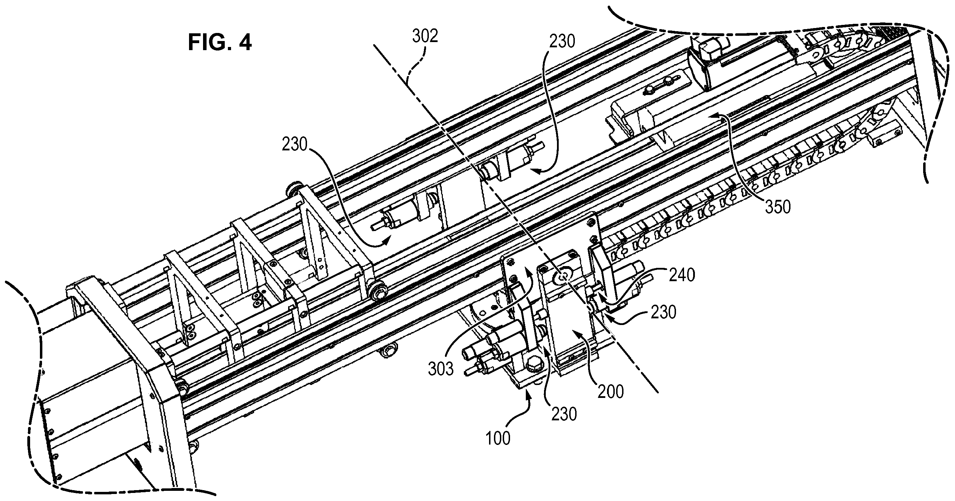

- la figure 4 représente une vue partielle du dispositif illustrant plus particulièrement le montage en articulation d'un organe intermédiaire sur une embase support et du carter du dispositif de couplage sur l'organe intermédiaire,

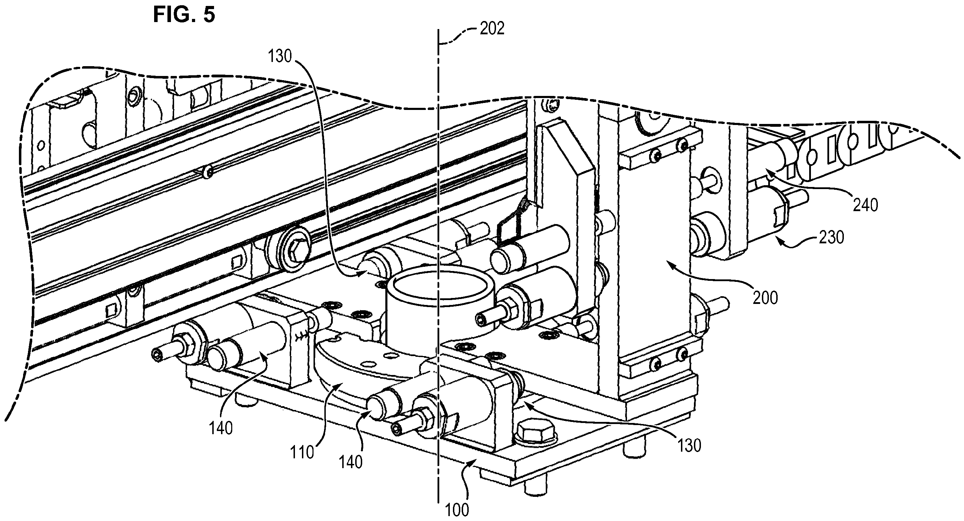

- la figure 5 représente une autre vue à échelle agrandie des mêmes moyens d'articulation du carter sur l'organe intermédiaire et de l'organe intermédiaire sur l'embase,
- la figure 6 représente une vue de l'organe intermédiaire articulé sur l'embase,
- la figure 7 représente une vue similaire en coupe de l'organe intermédiaire articulé sur l'embase pour illustrer plus particulièrement la réalisation d'un axe central sous forme d'un cylindre creux pour le passage de câble(s) de liaison électrique,
- la figure 8 représente une vue schématique en coupe partielle longitudinale d'un dispositif de butée anti-rotation,
- la figure 9 représente une vue partielle du dispositif de couplage illustrant en particulier un système de courroie/poulies pour le déploiement du bras,
- la figure 10 représente une vue d'une trappe de fermeture du carter en position fermée,
- la figure 11 représente une vue similaire de la trappe en cours d'ouverture,
- la figure 12 représente plus précisément la coopération entre un doigt d'actionnement prévu sur un contrepoids et une came solidaire de la trappe,
- la figure 13 représente schématiquement la coopération entre une station de recharge électrique et un tramway,
- la figure 14 représente schématiquement l'engagement d'un bras extensible du dispositif du couplage électrique conforme à l'invention prévu sur une station de recharge électrique avec un cône complémentaire prévu sur un tramway,
- la figure 15 représente une vue similaire dans le cas d'un désalignement axial du bras par rapport au cône,
- la figure 16 représente l'alignement automatique du bras sur le cône résultant des degrés de liberté du bras extensible par rapport à l'embase support, selon l'invention.

Le dispositif de couplage conforme à la présente invention comprend :
- une embase 100 destinée à être fixée sur le châssis support d'une station de recharge,
- un organe intermédiaire 200 susceptible de débattement angulaire autour d'un axe vertical 202 sur l'embase 100, et
- un boitier ou carter 300 qui loge un vérin 310 dont le bras 320 est extensible dans une direction horizontale 322, orthogonale de préférence à la direction de déplacement du véhicule à connecter par rapport à la station.

Le carter 300 est lui-même susceptible de débattement angulaire autour d'un axe horizontal 302 orthogonal à la direction d'extension 322.

La platine d'embase 100 peut faire l'objet de nombreuses variantes de réalisation et ne sera pas décrite dans le détail par la suite.

L'organe intermédiaire 200 a la forme générale d'une chape, ou élément en U, comprenant une base horizontale 210 et deux ailes ou parois latérales verticales 212, 214.

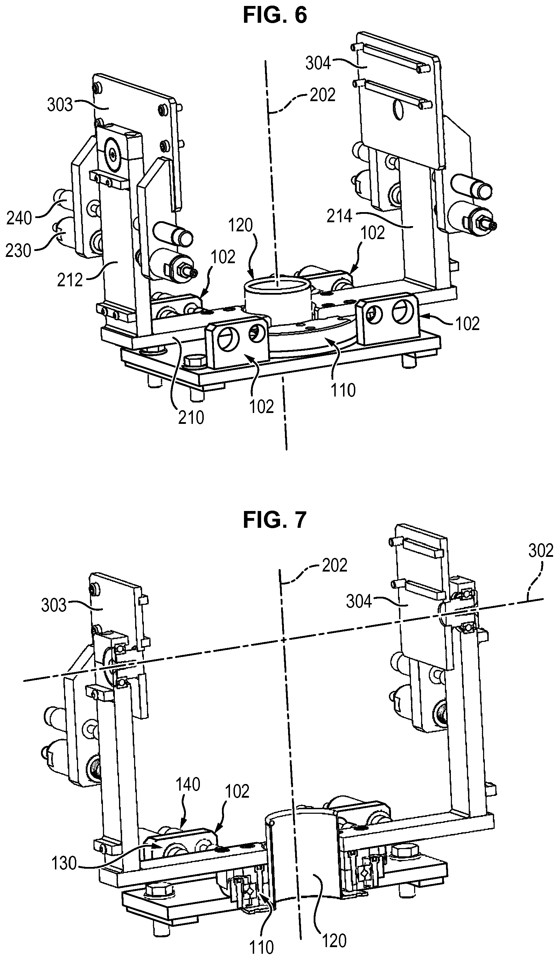

La base 210 est articulée en rotation sur l'embase 100 par tout moyen approprié, par exemple par l'intermédiaire de roulement à galets croisés 110 pour permettre de laisser un orifice central 120 libre, comme illustré sur les figures 6 et 7, pour le passage de câbles de la station vers le carter 300.

Le déplacement angulaire autorisé entre l'organe intermédiaire 200 et l'embase 100 autour de l'axe vertical 202 est limité par un système de butées à ressort 130 et d'amortisseurs 140. Il est ainsi prévu de préférence deux paires de butées 130 et d'amortisseurs 140 à raison d'une paire de chaque côté de la base 210 et d'une butée 130 et d'un amortisseur 140 de chaque côté de l'axe de rotation 202, comme illustré sur les figures 6 et 7.

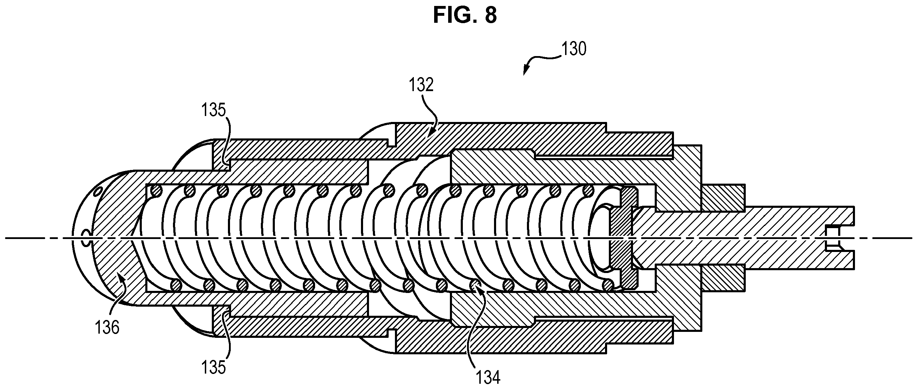

Les systèmes de butées à ressort 130 précités sont intercalés entre les flancs de la base 210 et des plans 102 en regard, portés par une partie horizontale de l'embase 100. Les systèmes de butées à ressort 130 peuvent faire l'objet de nombreuses variantes de réalisation. Il peut s'agir d'éléments conformes aux dispositions illustrées sur la figure 8 comprenant, dans une cage 132, un ressort 134 qui sollicite vers l'extérieur un plot 136 en élastomère, ou équivalent, monté à coulissement dans la cage 132. Des moyens sous forme de décrochements 135, ou équivalents, limitent la sollicitation vers l'extérieur du plot 136 par rapport à la cage 132 sous l'effet du ressort 134.

Les moyens amortisseurs 140, par exemple de types hydrauliques, sont associés au système de butées 130 pour la compliance selon l'axe vertical 202 et permettent d'éviter des oscillations de l'organe intermédiaire 200 par rapport à l'embase 100.

Le carter 300 est lui-même en rotation autour de l'axe 302 sur les ailes 212, 214 de la chape 200. Là encore, des platines latérales 303, 304 liées aux flancs du carter 300 et articulées sur la chape 200 autour de l'axe 302 sont limitées en débattement angulaire autour de cet axe 302 par des butées 230 et des moyens amortisseurs 240 similaires aux moyens 130 et 140 précités.

Comme on le voit sur la figure 6, il est ainsi prévu de préférence une paire de butées 230 et d'amortisseurs 240 de chaque côté de chaque aile 212, 214 de l'organe mobile 200, portée par les platines 303 et 304.

Le carter 300 a une forme allongée selon la direction d'extension 322 du bras 320.

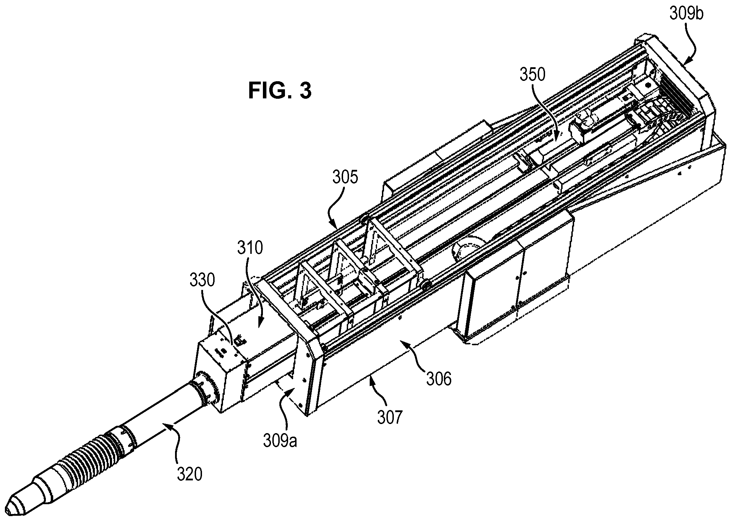

Comme illustré plus particulièrement sur la figure 3, le carter 300 comprend ici quatre parois longitudinales 305, 306, 307 et 308 (non représentée sur la figure pour des raisons de clarté) et deux parois d'extrémité 309a, 309b.

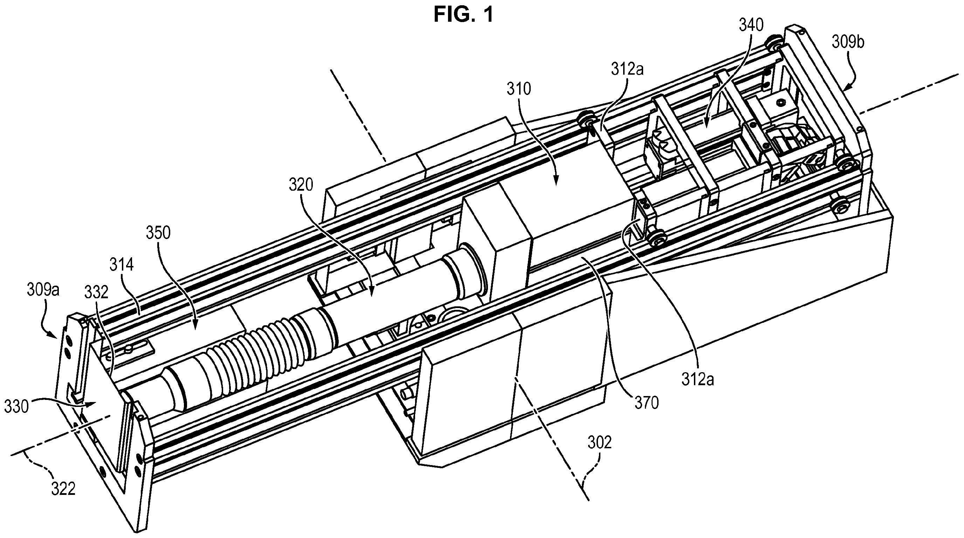

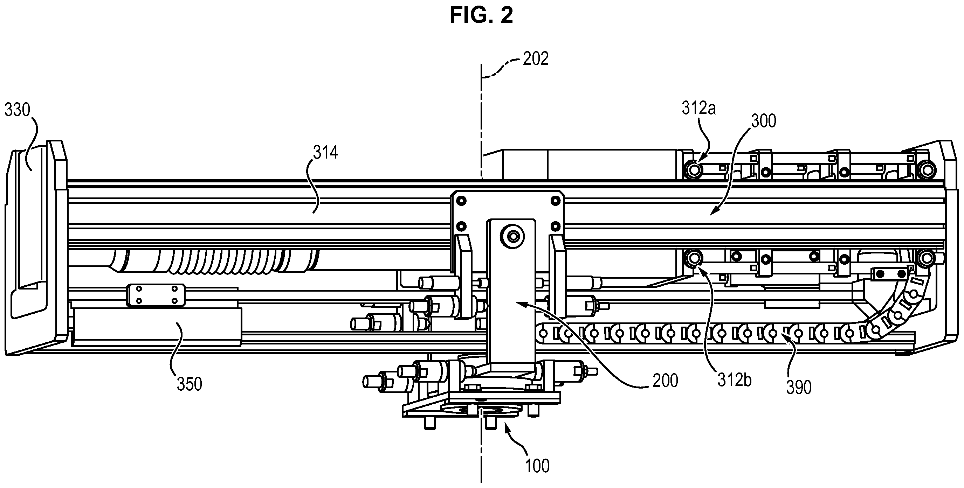

La paroi avant 309a, par laquelle est destiné à émerger le bras 320, est équipée d'un volet ou trappe 330, mobile entre une position fermée, comme illustré sur les figures 1 et 2, et une position ouverte, comme illustré sur la figure 3. Cette disposition sera précisée par la suite.

Le vérin 310 est monté à coulissement dans le carter 300 dans la direction d'extension 322. A cet effet, le vérin 310 est par exemple monté sur un chariot 370 guidé à coulissement dans la direction d'extension 322 par des galets 312 montés sur des rails 314 s'étendant longitudinalement parallèlement à la direction d'extension 322. Comme illustré plus particulièrement sur la figure 2, des galets supérieurs 312a et des galets inférieurs 312b roulent respectivement sur le rail 314.

Le vérin 310 est ainsi entrainé par un système de moto-réducteur 340 prévu en partie arrière du carter 300.

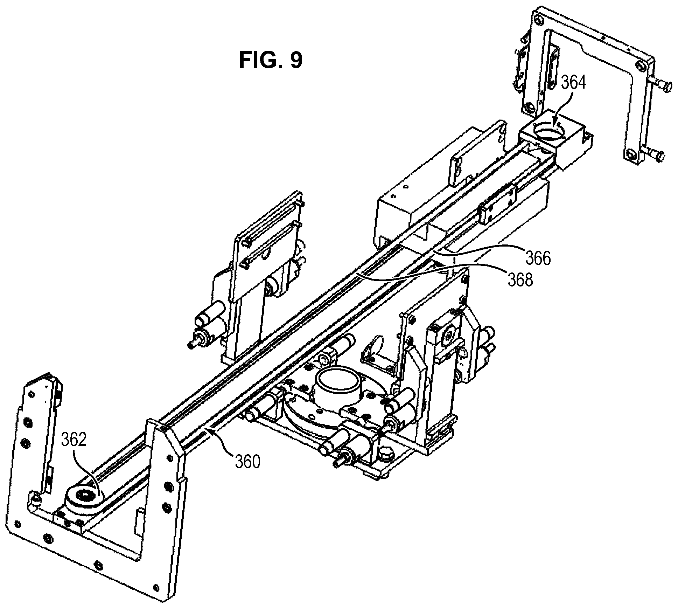

Le carter 300 loge par ailleurs une courroie 360 continue enroulée sur une première poulie 362 et une deuxième poulie 364, respectivement ménagées à proximité des parois avant 309a et arrière 309b du carter 300. Les première et deuxième poulies 362 et 364 sont chacune montées en rotation autour d'un axe globalement orthogonal à la direction d'extension 322 du vérin 310 et à l'axe horizontal 302. Dans l'exemple illustré à la figure 9, la première poulie 362 est suiveuse, tandis que la deuxième poulie 364 est motrice et est pour cela entraînée en rotation par le système de moto-réducteur 340.

Le vérin 310 est fixé sur un premier brin 366 de la courroie 360 et un contrepoids 350 est prévu sur le deuxième brin 368 de la courroie 360, opposé au premier brin 366. Ainsi, lorsque le vérin 310 est déplacé vers l'avant dans une position d'extension, le contrepoids 350 est déplacé en sens inverse, c'est-à-dire vers l'arrière du carter 300, de sorte que le centre de gravité de l'ensemble formé par le vérin 310 et le contrepoids 350 reste toujours sensiblement au voisinage du point d'intersection des axes d'articulation 202 et 302, pour équilibrer la masse mécanique du système quelle que soit la position du vérin 310.

A l'examen comparé des figures 1 et 3, on aperçoit qu'en position rétractée du bras 320, le contrepoids 350 se situe en partie avant du carter 300 au voisinage de la trappe 330, comme illustré sur la figure 1, alors qu'en position déployée du bras 320, comme illustrée sur la figure 3, le contrepoids 350 se situe en partie arrière du carter 300 à proximité de la paroi arrière 309b.

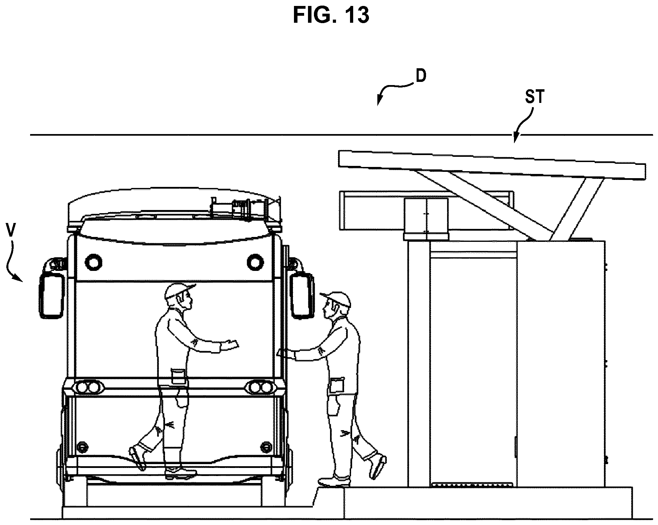

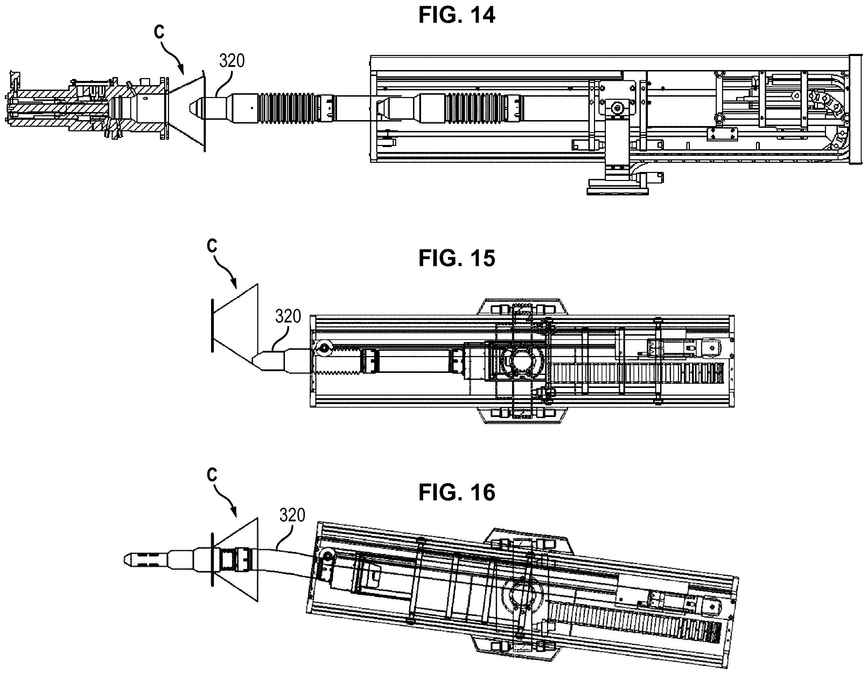

Le principe de l'invention est de proposer ainsi, comme illustré sur la figure 13, une station de tramway ST équipée sur sa partie supérieure, en D, du dispositif de couplage électrique précité, objet de l'invention. Les véhicules V associés, par exemple du type tramway, sont équipés sur leur toit d'une partie complémentaire de l'extrémité du bras 320, par exemple une partie femelle complémentaire sous forme d'un cône C adaptée pour recevoir l'extrémité du bras 320. La figure 14 illustre ainsi une extrémité de bras 320 en cours de déploiement en position alignée coaxialement à l'entrée du cône C. Dans le cas d'un tel alignement, le contact entre l'extrémité du bras 320 et les moyens complémentaires prévus en fond du cône C peut s'établir sans difficulté.

On a illustré sur la figure 15 le cas d'un désalignement entre l'extrémité du bras 320 et le cône C dépendant de la position du véhicule V par rapport à la station ST ainsi équipée.

Comme on le voit sur la figure 16, grâce au double débattement angulaire autorisé du dispositif de couplage selon l'invention autour de l'axe vertical 202 et de l'axe horizontal 302, combiné si nécessaire avec la souplesse intrinsèque du bras 320, l'extrémité du bras 320 peut se réaligner automatiquement sur le fond du cône C, dès lors que l'extrémité du bras 320 est située en regard de l'ouverture du cône C. Une telle souplesse intrinsèque, en combinaison avec le double débattement angulaire, permet notamment au bras de ne former qu'une seule courbure et éviter une courbure du type « en S » (avec 2 courbures), qui pourrait engendrer des problèmes de disfonctionnement ou une détérioration plus précoce.

A titre d'exemple non limitatif dans le cadre de l'invention, le système peut être adapté pour accepter une tolérance de plus ou moins 100 millimètres en X, c'est-à-dire dans le sens longitudinal de déplacement du véhicule, et en Z, c'est-à-dire dans le sens vertical, et une tolérance de plus ou moins 250 millimètres en Y, c'est-à-dire dans la direction d'extension 322 du bras 320 par rapport à la station.

Toujours à titre d'exemple non-limitatif, la course totale du bras 320 dans la direction d'extension 322 peut être de l'ordre de 1100 millimètres.

On a évoqué précédemment la trappe 330 prévue sur la paroi avant 309a du carter 300.

Dans le cadre de l'invention, la trappe 330 est de préférence sollicitée élastiquement en position d'ouverture (position de repos) et maintenue mécaniquement en position de fermeture par un doigt prévu sur le contrepoids 350 (position de contrainte élastique).

Ainsi, de préférence, la trappe 330 est articulée sur le carter 300 autour d'une charnière verticale à ressorts 332.

Lors du retrait du vérin/coupleur 310, c'est-à-dire lors de la rétraction du bras 320 à l'intérieur du carter 300, un doigt 352 prévu sur le contrepoids 350 vient en appui contre un galet ou une came 324 solidaire de la trappe 330. Le doigt 352 vient ainsi forcer la trappe 330 à la fermeture et tend les ressorts 334 intégrés à la charnière 332. Il est rappelé que, en position de repos, les ressorts 334 précités sollicitent la trappe 330 en position d'ouverture. Le système précité permet ainsi de lier l'ouverture de la trappe 330 à la sortie du bras 320 du vérin 310 pour éviter tout problème de fonctionnement, notamment fuite ou problème d'étanchéité.

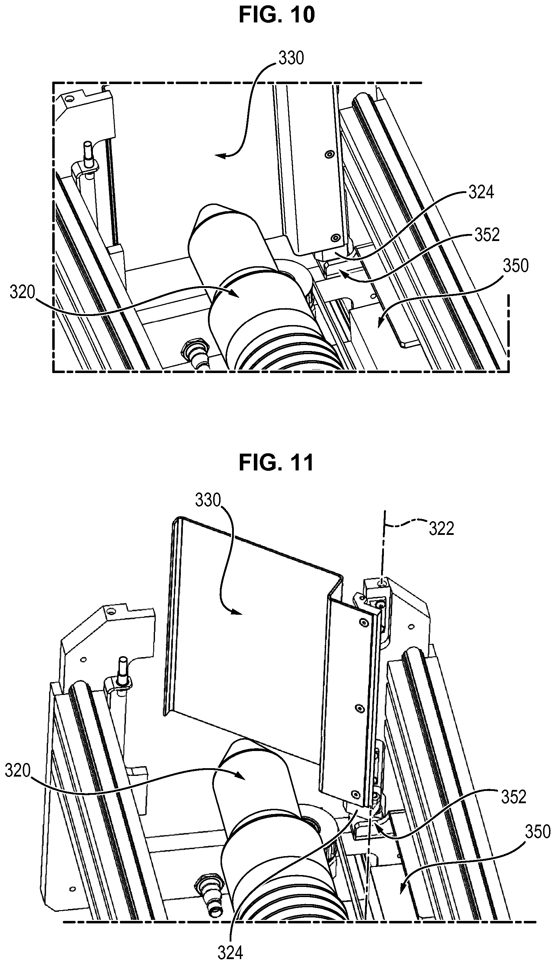

La figure 10 illustre ainsi la trappe 330 en position fermée, le doigt 352 du contrepoids 350 sollicitant la came 324.

La figure 11 illustre la trappe 330 en position intermédiaire d'ouverture, le doigt 352 du contrepoids 350 commençant à s'éloigner de la came 324, ce qui libère la contrainte des ressorts 334 d'articulation du volet 330 et enclenche l'ouverture du volet 330 simultanément à la sortie du bras 320.

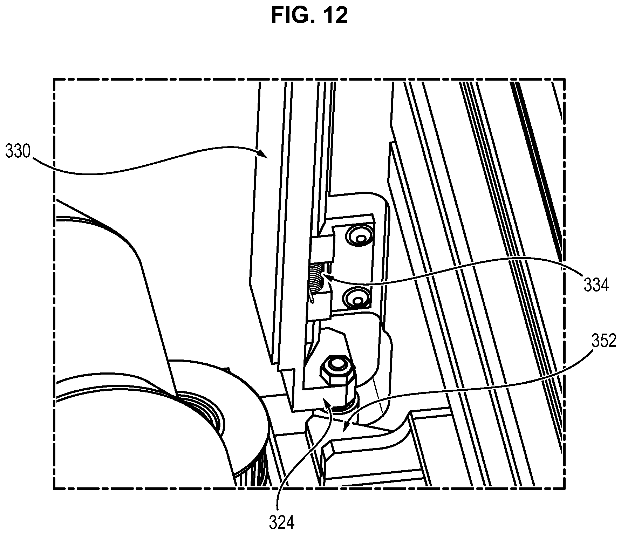

La figure 12 illustre le volet 330 en position totalement ouverte. Les ressorts 334 agencés au niveau de l'axe de rotation 332 du volet 330 sont alors dans leur position de repos non contrainte. On voit sur la figure 12 que le doigt 352 du contrepoids 350 n'est plus en contact avec la came 324 de la trappe 330.

L'homme de l'art appréciera que l'invention offre notamment les avantages suivants par rapport à l'état de la technique :
- un système robuste, fiable, peu coûteux et facile à installer sur une station,
- un seul actionneur est nécessaire pour assurer la connexion, y compris la fermeture de la trappe 330,
- le système de demi-rotule, à savoir les deux degrés de liberté autorisés pour le carter 300 enfermant le bras 320 du vérin 310, permet de ne pas contraindre la connectique utilisée pour réaliser la liaison électrique entre la station de recharge et le véhicule,
- le système selon l'invention permet de ne pas pousser trop fort et évite une grande courbe de mouvement de la connectique.

On a schématisé sur la figure 2 sous la référence 390 un moyen de liaison articulée cheminant depuis l'ouverture 120 prévue dans l'embase 100 et reliée au bras 320 pour assurer une liaison électrique adéquate, quelle que soit la position à la fois en débattements angulaires du carter 300 et en extension du bras 320.

## Revendications

1. Dispositif de couplage électrique pour une station de recharge d'un véhicule électrique comprenant un vérin/coupleur (310) muni d'un bras extensible (320) adapté pour être déplacé entre une position rétractée et une position déployée, dans laquelle le bras extensible (320) est adapté pour assurer une liaison électrique, et des moyens supports (100, 200) du vérin/coupleur (310) autorisant deux degrés de liberté par rotation du vérin/coupleur (310) par rapport à une embase support (100) autour de deux axes (202, 302) transversaux entre eux et orthogonaux à une direction d'extension (322) du bras, le vérin/coupleur (310) étant placé dans un carter de protection (300) susceptible de débattement angulaire autour d'un axe vertical (202) et autour d'un axe horizontal (302) perpendiculaire à la direction d'extension (322) du bras extensible (320) par rapport à une embase support (100), le dispositif étant **caractérisé en ce que** le bras extensible (320) est monté sur un moyen lié à un premier brin (366) d'une courroie (360) entrainée par un moto-réducteur (340), un contrepoids (350) étant lié à un deuxième brin (368) opposé de la courroie (360) et **en ce que** le carter de protection (300) est muni d'une trappe (330) mobile en déplacement entre une position fermée, en position rétractée du bras extensible (320), et une position ouverte, en position d'extension du bras extensible (320), et la trappe (330) est ouverte automatiquement lors de la commande en extension du bras extensible (320).

2. Dispositif selon la revendication 1, **caractérisé par le fait que** le bras extensible (320) est au moins en partie souple.

3. Dispositif selon l'une des revendications 1 ou 2, **caractérisé par le fait que** la trappe (330) est maintenue élastiquement en position de fermeture par un doigt (352) porté par le contrepoids (350) et sollicitée élastiquement en position d'ouverture pour reprendre sa position de repos.

4. Dispositif selon l'une des revendications 1 à 3, **caractérisé par le fait qu'**il comprend une embase support (100) adaptée pour être fixée sur un point support et un organe intermédiaire (200) monté en débattement angulaire autour d'un axe vertical (202) sur l'embase support (100), le carter de protection (300) du vérin/coupleur (310) étant monté en débattement angulaire autour d'un deuxième axe (302) sur l'organe intermédiaire (200).

5. Dispositif selon l'une des revendications 1 à 4, **caractérisé par le fait qu'**il comprend des butées (130, 230) limitant le débattement angulaire des moyens supports (100, 200) du vérin/coupleur (310).

6. Dispositif selon l'une des revendications 1 à 5, **caractérisé par le fait qu'**il comprend des moyens amortisseurs (140, 240) contraignant le débattement angulaire des moyens supports (100, 200) du vérin/coupleur (310).

7. Dispositif selon l'une des revendications 1 à 6, **caractérisé par le fait que** le vérin/coupleur (310) est monté sur un chariot (370) guidé à translation sur des rails (314).

8. Station de recharge pour véhicule électrique, **caractérisée par le fait qu'**elle est équipée d'un dispositif de couplage électrique conforme à l'une des revendications 1 à 7.

## Patentansprüche

1. Kopplungsvorrichtung für eine Ladestation von einem Elektrofahrzeug, die einen Zylinder/Koppler (310) umfasst, der mit einem ausziehbaren Arm (320) versehen ist, der angepasst ist, um zwischen einer eingezogenen Position und einer ausgefahrenen Position verlagert zu werden, wobei der ausziehbare Arm (320) angepasst ist, um eine elektrische Verbindung sicherzustellen, und Stützmittel (100, 200) des Zylinders/Kopplers (310) zwei Freiheitsgrade durch Drehung des Zylinders/Kopplers (310) in Bezug auf einen Stützsockel (100) um zwei Achsen (202, 302) zulassen, die quer zueinander sind und orthogonal zu einer Ausziehrichtung (322) des Armes sind, wobei der Zylinder/Koppler (310) in einem Schutzgehäuse (300) platziert ist, das geeignet ist, eine Winkelauslenkung um eine vertikale Achse (202) und um eine horizontale Achse (302) senkrecht zu der Ausziehrichtung (322) des ausziehbaren Armes (320) in Bezug auf einen Stützsockel (100) aufzuweisen,
wobei die Vorrichtung **dadurch gekennzeichnet ist, dass** der ausziehbare Arm (320) auf einem Mittel montiert ist, das mit einem ersten Trum (366) eines Riemens (360) verbunden ist, der durch einen Getriebemotor (340) angetrieben wird, wobei ein Gegengewicht (350) mit einem zweiten, entgegengesetzten Trum (368) des Riemens (360) verbunden ist, und dadurch dass das Schutzgehäuse (300) mit einer Klappe (330) versehen ist, die zur Verlagerung zwischen einer geschlossenen Position in der eingezogenen Position des ausziehbaren Arms (320) und einer offenen Position in der ausgefahrenen Position des ausziehbaren Arms (320) beweglich ist, wobei die Klappe (330) bei der Steuerung des Ausziehens des ausziehbaren Arms (320) automatisch geöffnet wird.

2. Vorrichtung nach Anspruch 1, **dadurch gekennzeichnet, dass** der ausziehbare Arm (320) mindestens teilweise nachgiebig ist.

3. Vorrichtung nach einem der Ansprüche 1 oder 2, **dadurch gekennzeichnet, dass** die Klappe (330) durch einen Finger (352), der durch das Gegengewicht (350) getragen wird, elastisch in der geschlossenen Position gehalten wird, und elastisch in die geöffnete Position beansprucht wird, um wieder ihre Ruheposition einzunehmen.

4. Vorrichtung nach einem der Ansprüche 1 bis 3, **dadurch gekennzeichnet, dass** sie einen Stützsockel (100), der angepasst ist, um an einem Stützpunkt befestigt zu werden, und ein Zwischenorgan (200) umfasst, das mit einer Winkelauslenkung um eine vertikale Achse (202) auf dem Stützsockel (100) gelagert ist, wobei das Schutzgehäuse (300) des Zylinders/Kopplers (310) mit einer Winkelauslenkung um eine zweiten Achse (302) auf dem Zwischenorgan (200) gelagert ist.

5. Vorrichtung nach einem der Ansprüche 1 bis 4, **dadurch gekennzeichnet, dass** sie Anschläge (130, 230) umfasst, die die Winkelauslenkung der Stützmittel (100, 200) des Zylinders/Kopplers (310) begrenzen.

6. Vorrichtung nach einem der Ansprüche 1 bis 5, **dadurch gekennzeichnet, dass** sie Dämpfungsmittel (140, 240) umfasst, die die Winkelauslenkung der Stützmittel (100, 200) des Zylinders/Kopplers (310) einzwängen.

7. Vorrichtung nach einem der Ansprüche 1 bis 6, **dadurch gekennzeichnet, dass** der Zylinder/Koppler (310) auf einem Schlitten (370) gelagert ist, der translatorisch auf Schienen (314) geführt wird.

8. Ladestation für Elektrofahrzeuge, **dadurch gekennzeichnet, dass** sie mit einer elektrischen Kopplungsvorrichtung nach einem der Ansprüche 1 bis 7 ausgestattet ist.

## Claims

1. An electrical coupling device for an electric vehicle recharging station comprising a cylinder/coupler (310) provided with an extensible arm (320) adapted to be movable between a retracted position and a deployed position, in which the extensible arm (320) is adapted to ensure electrical connection, and support means (100, 200) of the cylinder /coupler (310) allowing two degrees of freedom by rotation of the cylinder/coupler (310) with respect to a support base (100) about two axes (202, 302) transverse to each other and orthogonal to a direction of extension (322) of the arm, the cylinder/coupler (310) being placed in a protective casing (300) capable of angular displacement about a vertical axis (202) and about a horizontal axis (302) perpendicular to the direction of extension (322) of the extensible arm (320) with respect to a support base (100) ,
the device being **characterized in that** the extensible arm (320) is mounted on a means linked to a first strand (366) of a belt (360) driven by a geared motor (340), a counterweight (350) being linked to a second strand (368) opposite the belt (360) and **in that** the protective casing (300) is provided with a hatch (330) movable in displacement between a closed position, in the retracted position of the extensible arm (320), and an open position, in the extended position of the extensible arm (320), and the hatch (330) is automatically opened during the extension command of the extensible arm (320).

2. The device according to claim 1, **characterized by** the fact that the extensible arm (320) is at least partly flexible.

3. The device according to any one of claims 1 or 2, **characterized by** the fact that the hatch (330) is resiliently held in the closed position by a finger (352) carried by the counterweight (350) and resiliently biased in the open position to return to its rest position.

4. The device according to any one of claims 1 to 3, **characterized by** the fact that it comprises a support base (100) adapted to be fixed on a support point and an intermediate member (200) mounted in angular displacement about a vertical axis (202) on the support base (100), the protective casing (300) of the cylinder/coupler (310) being mounted in angular displacement about a second axis (302) on the intermediate member (200).

5. The device according to any one of claims 1 to 4, **characterized by** the fact that it comprises stops (130, 230) limiting the angular displacement of the support means (100, 200) of the cylinder/coupler (310).

6. The device according to any one of claims 1 to 5, **characterized by** the fact that it comprises damping means (140, 240) constraining the angular displacement of the support means (100, 200) of the cylinder/coupler (310) .

7. The device according to any one of claims 1 to 6, **characterized by** the fact that the cylinder/coupler (310) is mounted on a carriage (370) guided in translation on rails (314).

8. A recharging station for an electric vehicle, **characterized by** the fact that it is equipped with an electrical coupling device in accordance with any one of claims 1 to 7
